(19) Europäisches Patentamt

European Patent Office

Office européen des brevets

(11) Veröffentlichungsnummer: **0 268 753 B1**

## (12) EUROPÄISCHE PATENTSCHRIFT

(45) Veröffentlichungstag der Patentschrift: **24.04.91**

(21) Anmeldenummer: **87112189.3**

(22) Anmeldetag: **21.08.87**

(51) Int. Cl.⁵: **B23Q 11/00**

(54) **Ausbalancierte Messerköpfe.**

(30) Priorität: **26.09.86 DE 3632805**

(43) Veröffentlichungstag der Anmeldung:
**01.06.88 Patentblatt 88/22**

(45) Bekanntmachung des Hinweises auf die
Patenterteilung:
**24.04.91 Patentblatt 91/17**

(84) Benannte Vertragsstaaten:
**AT BE CH DE ES FR GB GR IT LI LU NL SE**

(56) Entgegenhaltungen:
**DE-A- 2 235 264**
**DE-C- 834 493**
**DE-C- 838 502**
**DE-C- 847 200**
**DE-C- 957 520**

(73) Patentinhaber: **G. Walter Steffens GmbH & Co.**
**Unterhölterfelder Strasse 60**
**W-5630 Remscheid 1(DE)**

(72) Erfinder: **Steffens, Gustav Walter**
**Unterhölterfelde Strasse 60**
**W-5630 Remscheid 1(DE)**

(74) Vertreter: **Finck, Dieter et al**
**Patentanwälte v. Füner, Ebbinghaus, Finck**
**Mariahilfplatz 2 & 3**
**W-8000 München 90(DE)**

## Beschreibung

Die Erfindung betrifft eine Vorrichtung zum Auswuchten von Kuttermesserköpfen, die von auf einer Antriebswelle festgelegten Schneidmessern und Scheiben gebildet werden, wobei am Umfang wenigstens einer Scheibe wenigstens ein in ihrer Umfangsrichtung verschiebbares und festlegbares Auswuchtelement vorgesehen ist.

Bei einer solchen, aus der DE-OS 27 39 740, welche den nächstliegenden Stand der Technik beschreibt, bekannten Vorrichtung besteht das Auswuchtelement aus einem Ring mit exzentrischer Massenverteilung, der auf dem Umfang der Scheibe in die Auswuchtstellung verdreht und in dieser Stellung durch stirnseitige Spannschrauben festgelegt werden kann.

Mit der bekannten Vorrichtung läßt sich zwar der Messerkopf auswuchten, die axiale Länge des Messerkopfes wird jedoch aufgrund dieser Scheiben relativ groß.

Die der Erfindung zugrunde liegende Aufgabe besteht un darin, die Vorrichtung der eingangs genannten Art so auszubilden, daß sich unter Beibehaltung der axialen Messerkopflänge seine Arbeitsfähigkeit steigern läßt.

Diese Aufgabe wird ausgehend von der Vorrichtung der eingangs genannten Art dadurch gelöst, daß das Auswuchtelement als Funktionselement zum Schneiden, Mischen, Fördern und/oder Emulgieren ausgebildet ist.

Dabei ist das Auswuchtelement zweckmäßigerweise den Formen von Kuttermessern entsprechend ausgebildet. Es kann die Form von Rechtekken, Dreiecken oder Rhomben haben. Die Auswuchtelemente können auch typische Zahnformen, wie Sägezahnformen sein.

Die erfindungsgemäße Vorrichtung hat den Vorteil, daß sich der Messerkopf ohne Schwierigkeiten in der erforderlichen Weise auswuchten läßt, wobei gleichzeitig die Scheiben mit den Auswuchtelementen zur Beeinflussung des Gutes beitragen, ohne daß die axiale Länge des Messerkopfes durch Anordnen weiterer Bearbeitungselemente verlängert zu werden braucht. Mit der erfindungsgemäßen Vorrichtung kann beispielsweise die Materialflußrichtung sowohl in der Kutterschüssel als auch im Schneidraum des Kutterdeckels beeinflußt werden. Außerdem kann mit Hilfe der Vorrichtung auch die Temperatur des zu bearbeitenden Gutes reguliert werden.

Um ein einfaches Festlegen und Verschieben des oder der Auswuchtelemente an der jeweiligen Scheibe zu ermöglichen, hat die Scheibe am Umfang ein Schwalbenschwanzprofil, in das das Auswuchtelement einsetzbar ist. Dabei kann in der Umfangsfläche der Scheibe eine Schwalbenschwanznut ausgebildet sein, in die ein Schwalbenschwanzprofil des Auswuchtelements eingreift. Es kann auch von der Umfangsfläche ein ringförmiger Vorsprung mit einem Schwalbenschwanzprofil vorgesehen werden, das in eine Schwalbenschwanznut in dem Auswuchtelement eingreift.

Anhand von Zeichnungen werden Ausführungsbeispiele der Erfindung näher erläutert. Es zeigen:

Fig. 1 einen Kuttermesserkopf in einer Seitenansicht,

Fig. 2 eine Stirnansicht eines in eine Treibscheibe eingesetzten Kuttermessers,

Fig. 3 eine Stirnansicht einer ersten Ausführungsform einer Scheibe mit Auswuchtelement,

Fig. 4a und 4b jeweils eine Scheibe mit Auswuchtelement im Axialschnitt und

Fig. 5a bis 5d in Stirnansichten Scheiben mit vier weiteren Ausführungsformen von Auswuchtelementen.

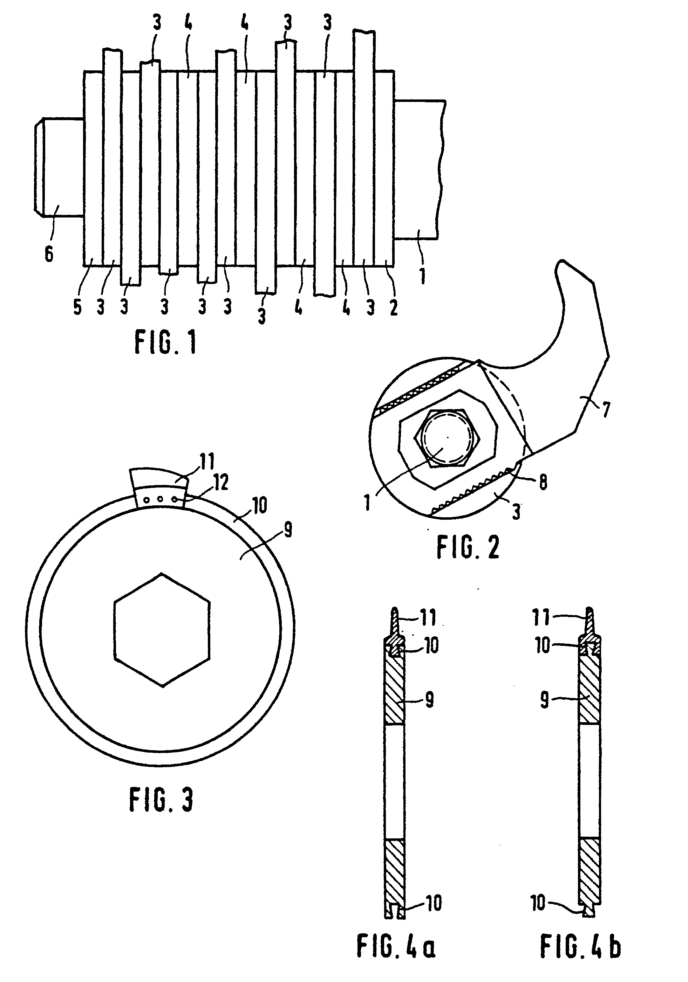

Der in der Fig. 1 gezeigte Messerkopf für Kutter weist eine angetriebene Profilwelle 1 auf, auf der nacheinander eine erste Abschlußscheibe 2, mehrere Treibscheiben 3 mit dazwischenliegenden Distanzscheiben 4, eine zweite Abschlußscheibe 5 sowie eine das Ende der Profilwelle 1 abdeckende Kopfmutter 6 angeordnet sind. In jede Treibscheibe 3 ist ein Kuttermesser 7 (Fig. 2) eingesetzt, das von einer Zahnreihe 8 am Kuttermesser, die in ein entsprechendes Gegenstück an der Treibscheibe 3 eingreift, gehalten wird. Die einzelnen Kuttermesser 7 am Messerkopf sind bezüglich einer zur Rotationsachse des Messerkopfes senkrechten Ebene um bestimmte Winkelbeträge gegeneinander versetzt. So können zwei aufeinanderfolgende Messer einen Winkel von beispielsweise 60°, 90°, 120° oder 180° einschließen.

Die Abschluß-, Treib- und Distanzscheiben 2, 3, 4 und 5 können einzeln oder alle miteinander als Auswuchtscheiben ausgebildet sein. Eine solche Auswuchtscheibe 9 (Fig. 3) ist an ihrem Umfang mit einem umlaufenden Schwalbenschwanzprofil 10 versehen, das in der Umfangsfläche der Auswuchtscheibe 9 innenliegend (Fig. 4a), d.h. durch eine Nut in der Umfangsfläche, oder außenliegend (Fig. 4b) ausgeführt sein kann. Auf die Auswuchtscheibe 9 sind Auswuchtelemente 11 aufgeschoben, die auf der der Auswuchtscheibe 9 zugewandten Seite ein dem Schwalbenschwanzprofil 10 entsprechendes Profil aufweisen. Die Auswuchtelemente 11 bilden die eigentlichen Ausgleichsgewichte zum Beseitigen auftretender Unwuchten. Zum Aufschieben der Auswuchtelemente 11 auf das als Führung für diese dienende Schwalbenschwanzprofil 10 weist dieses Profil an einer Stelle des Umfangs der Auswuchtscheibe 9 eine Aussparung auf.

Das Auswuchten selbst erfolgt durch Verschieben der Auswuchtelemente 11 am Umfang der Auswuchtscheiben 9 und Festlegen der Auswuchtelemente 11 an der geeigneten Stelle, z.B. durch Festklemmen der Auswuchtelemente mittels Schrauben 12. In der Regel sind pro Auswuchtscheibe zwei oder mehr Auswuchtelemente erforderlich.

Die Auswuchtelemente 11 haben eine solche Höhe, daß sie zum Scheibendurchmesser einen gewissen Überstand aufweisen. Dieser Überstand kann zum Beispiel im Bereich zwischen 5 mm und etwa 200 mm liegen. Das Gewicht der Auswuchtelemente kann unterschiedlich sein und je nach Bedarf zum Beispiel zwischen 5 Gramm und einem Kilogramm liegen. Es können jedoch auch Auswuchtelemente verschiedener Form jeweils das gleiche Gewicht besitzen.

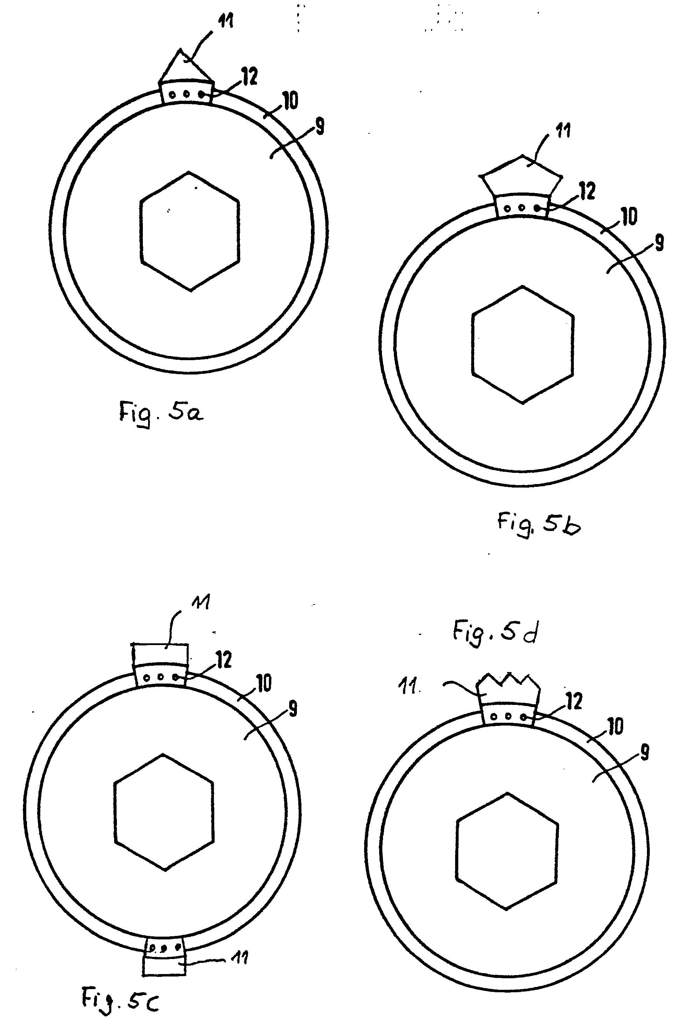

Bei der in Fig. 5a gezeigten Ausführungsform hat das Auswuchtelement 11 die Form eines Dreiecks, in Fig. 5b die Form eines Rhombus, in Fig. 5c die Form eines Rechtecks und in Fig. 5d eine Sägezahnkante, wobei sich der Schliff nach dem zu erreichenden Effekt, also Emulgieren, Schneiden, Mischen und/oder Fördern des Schnittgutes richtet. Der Schnitt kann dafür einseitig rechts oder links, beidseitig sowie mittig oder außermittig vorgesehen sein. Bei der in Fig. 5c gezeigten Ausführungsform sind zwei Auswuchtelemente 11 vorgesehen.

## Ansprüche

1. Vorrichtung zum Auswuchten von Kuttermesserköpfen, die von auf einer Antriebswelle (1) festgelegten Schneidmessern (7) und Scheiben (2,3,4,5) gebildet werden, wobei am Umfang wenigstens einer Scheibe (9) wenigstens ein in ihrer Umfangrichtung verschiebbares und festlegbares Auswuchtelement (11) vorgesehen ist, dadurch **gekennzeichnet,** daß das Auswuchtelement (11) als Funktionselement zum Schneiden, Mischen, Fördern und/oder Emulgieren ausgebildet ist.

2. Vorrichtung nach Anspruch 1, dadurch **gekennzeichnet**, daß das Auswuchtelement (11) den Formen von Kuttermessern entsprechend ausgebildet ist.

3. Vorrichtung nach Anspruch 1, dadurch **gekennzeichnet**, daß das Auswuchtelement (11) die Form eines Rechtecks, eines Dreiecks oder einer Rhombe hat.

4. Vorrichtung nach einem der Ansprüche 1 bis 3, dadurch **gekennzeichnet**, daß das Auswuchtelement (11) eine Sägezahnform hat.

5. Vorrichtung nach einem der Ansprüche 1 bis 4, dadurch **gekennzeichnet**, daß die Scheibe (9) am Umfang ein Schwalbenschwanzprofil (10) aufweist, in das das Auswuchtelement (11) einsetzbar ist.

## Claims

1. Device for balancing cutter blade heads formed by cutting blades (7) and discs (2, 3, 4, 5) which are secured on a drive shaft (1), wherein at the periphery of at least one disc (9) there is provided at least one balancing element (11) which can be displaced and secured in the circumferential direction thereof, characterised in that the balancing element (11) is formed as an operating component for cutting, mixing, conveying and/or emulsifying.

2. Device according to claim 1, characterised in that the balancing element (11) is formed in accordance with the shapes of cutter blades.

3. Device according to claim 1, characterised in that the balancing element (11) has the shape of a rectangle, a triangle or a rhombus.

4. Device according to any one of claims 1 to 3, characterised in that the balancing element (11) has a saw-tooth shape.

5. Device according to any one of claims 1 to 4, characterized in that the disc (9) comprises at its periphery a dovetailed profile (10) in which the balancing element (11) can be inserted.

## Revendications

1. Dispositif pour l'équilibrage des têtes à couteaux d'un mixeur formées de couteaux (7) et de disques (2, 3, 4, 5) fixés sur un arbre d'entraînement (1), étant précisé qu'à la périphérie d'au moins un disque (9) est prévu au moins un élément d'équilibrage (11) qui peut coulisser dans la direction périphérique du disque et être fixé, caractérisé par le fait que l'élément d'équilibrage (11) est conçu comme élément fonctionnel pour couper, mélanger, transporter et/ou émulsifier.

2. Dispositif selon la revendication 1, caractérisé par le fait que l'élément d'équilibrage (11) est conçu en fonction des formes des couteaux du mixeur.

3. Dispositif selon la revendication, caractérisé par le fait que l'élément d'équilibrage (11) a la forme d'un rectangle d'un triangle ou d'un losange.

4. Dispositif selon l'une des revendications 1 à 3,
caractérisé par le fait que l'élément d'équilibrage (11) a la forme de dents de scie.

5. Dispositif selon l'une des revendicatins 1 à 4,
caractérisé par le fait que le disque (9) présente, à la périphérie, un profil en queue d'aronde
(10), dans lequel l'élément d'équilibrage (11)
peut s'insérer.

EP 0 268 753 B1

FIG. 1

FIG. 2

FIG. 3

FIG. 4 a

FIG. 4 b

Fig. 5a

Fig. 5b

Fig. 5c

Fig. 5d